# EUROPEAN PATENT SPECIFICATION

(11) **EP 3 572 685 B1**
(45) Date of publication and mention of the grant of the patent: **03.03.2021**
(21) Application number: 19175351.6
(22) Date of filing: 20.05.2019
(51) Int. Cl.: F16D 65/12, B33Y 80/00

(54) **ADDITIVELY MANUFACTURED BRAKE ROTOR**
GENERATIV GEFERTIGTER BREMSROTOR
ROTOR DE FREIN FABRIQUÉ DE MANIÈRE ADDITIVE

(30) Priority: 23.05.2018 US 201815987289
(43) Date of publication of application: 27.11.2019
(73) Proprietor: General Electric Company, Schenectady, NY 12345 (US)
(72) Inventor: BELLARDI, Jason, Cincinnati, OH Ohio 45215 (US); AKWARA, Aigbedion, Cincinnati, OH Ohio 45215 (US)
(74) Representative: Openshaw & Co.

(56) References cited:
- EP-A1- 2 065 610
- EP-A1- 3 178 637
- WO-A1-2014/175625
- WO-A1-2015/092671
- DE-B3-102017 200 945
- GB-A- 2 553 835

## Description

### FIELD

The present subject matter relates generally to brake rotors, and more particularly, to additively manufactured brake rotors including features for improved cooling.

### BACKGROUND

Brake assemblies are used in the automotive, aviation, and other industries for slowing or stopping a moving vehicle or machine component by absorbing energy from a rotating mass, e.g., by using friction to slow the wheels. For example, one common type of brake assembly is a disc brake which uses calipers to squeeze a pair of brake pads against a rotating component of the wheel, i.e., the brake rotor. The brake rotor, and thus the vehicle, is slowed as its rotational kinetic energy is converted to thermal energy through friction, generating waste heat that must be dissipated. Notably, excess heat can cause warpage of the brake rotor, thermal cracks, surface faults, or other issues that affect the braking ability and reliability of the brake assemblies.

Therefore, certain conventional brake rotors include features for dissipating heat, such as ventilation passages. However, such ventilation passages are typically manufactured by drilling or machining holes or passages is a solid disc. Alternatively, ventilation passages are defined on an internal side of one disc and a second disc is attached to the first disc to form the complete brake rotor. Notably, forming brake rotors in this manner requires more parts and results in less reliability, longer manufacturing times, and increased costs. In addition, the size, geometry, and configuration of the ventilation passages are frequently limited by the manufacturing processes that form them.

Accordingly, an improved brake assembly with improved heat dissipation features would be useful. More specifically, an additively manufactured brake rotor that includes internal cooling passages for improved cooling and longer rotor life would be particularly beneficial.

EP 2065610 A1, WO 2014/175625 A1 and WO 2015/092671 A1 relate to ventilated brake disks. GB2553835 A and DE 102017200945B3 relate to additive manufacturing of brake disks. EP 3178637 A1 relates to manufacturing a carbon fiber reinforced preform by additive manufacturing.

### BRIEF DESCRIPTION

Aspects and advantages of the invention will be set forth in part in the following description, or may be obvious from the description, or may be learned through practice of the invention.

An additive manufactured brake rotor according to the invention is defined by the features of claim 1.

A method of manufacturing a brake rotor is further defined by the features of claim 15.

### BRIEF DESCRIPTION OF THE DRAWINGS

A full and enabling disclosure of the present invention, including the best mode thereof, directed to one of ordinary skill in the art, is set forth in the specification, which makes reference to the appended figures.
FIG. 1 is a perspective view of a brake assembly according to an exemplary embodiment of the present subject matter.
FIG. 2 is a partial perspective view of a brake rotor of the exemplary brake assembly of FIG. 1 according to an exemplary embodiment of the present subject matter.
FIG. 3 is another partial perspective view of the exemplary brake rotor of FIG. 2 according to an exemplary embodiment of the present subject matter.
FIG. 4 is a cross sectional view of the exemplary brake rotor of FIG. 2 according to an exemplary embodiment of the present subject matter.
FIG. 5 is a close-up partial perspective view of the exemplary brake rotor of FIG. 2 according to an exemplary embodiment of the present subject matter.
FIG. 6 is a method of manufacturing a brake rotor according to an exemplary embodiment of the present subject matter.

Repeat use of reference characters in the present specification and drawings is intended to represent the same or analogous features or elements of the present invention.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. The terms "forward" and "aft" refer to relative positions within a thermal management system, with forward referring to a position closer to component inlet and aft referring to a position closer to a component exhaust. The terms "upstream" and "downstream" refer to the relative direction with respect to fluid flow in a fluid pathway. For example, "upstream" refers to the direction from which the fluid flows, and "downstream" refers to the direction to which the fluid flows. Furthermore, as used herein, terms of approximation, such as "approximately," "substantially," or "about," refer to being within a ten percent margin of error.

The present disclosure is generally directed to a brake rotor and a method of manufacturing the same. The brake rotor includes a first disc and a second disc, each defining a braking plate and an inlet lip and being spaced apart to define an airgap. An internal structure is positioned within the airgap and extends between the first braking plate and the second braking plate to define a plurality of internal passages and a plurality of vanes are positioned within the airgap and extend between the outer inlet lip and the inner inlet lip.

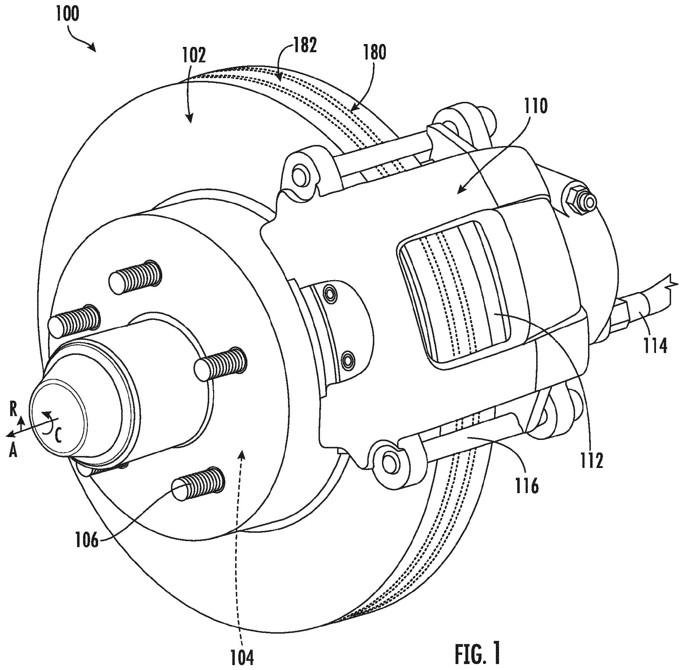

Referring now to the drawings, FIG. 1 is a perspective view of a brake assembly 100 in accordance with an exemplary embodiment of the present disclosure. More particularly, brake assembly 100 is a disc brake assembly which generally includes a brake rotor 102 which is mounted on and rotationally fixed to a wheel hub 104 of the vehicle, e.g., by wheel studs 106. In this manner, brake rotor 102 rotates with wheel hub 104 and thus a tire of the vehicle. When brake rotor 102 is slowed or stopped, the wheel hub 104, tire, and thus vehicle slow correspondingly.

In order to slow brake rotor 102, brake assembly 100 includes a caliper 110 that receives brake pad 112 positioned on opposite axial sides of brake rotor 102. When brake rotor 102 is spinning freely, brake pads 112 do not contact brake rotor 102. However, when a user of the vehicle applies the brakes, e.g. by pressing on the brake pedal, the pressure within a hydraulic piston (not shown) coupled to the calipers 110 is increased via flexible brake hose 114. At least one of the brake pads 112 is mounted on a sliding pin 116 and operably coupled to the hydraulic piston. In this manner, pressing the brake pedal causes the calipers 110 to pinch or clamp brake pads 112 onto brake rotor 102 to generate friction and slow the vehicle.

It should be appreciated that the exemplary brake assembly 100 depicted in FIG. 1 is by way of example only and that in other exemplary embodiments, brake assembly 100 may have any other suitable configuration. For example, it should be appreciated that in other exemplary embodiments, brake assembly 100 may instead be configured as any other suitable type of brake used on any suitable vehicle. In addition, brake rotor 102 may have any other suitable configuration having a different size, configuration, and internal features.

In general, the exemplary embodiments of brake rotor 102 described herein may be manufactured or formed using any suitable process. However, in accordance with several aspects of the present subject matter, brake rotor 102 may be formed using an additive-manufacturing process, such as a 3-D printing process. The use of such a process may allow brake rotor 102 to be formed integrally, as a single monolithic component, or as any suitable number of sub-components. In particular, the manufacturing process may allow brake rotor 102 to be integrally formed and include a variety of features not possible when using prior manufacturing methods. For example, the additive manufacturing methods described herein enable the manufacture of brake rotors having any suitable size and shape with multiple internal passageways and various features defined within these fluid passageways which were not possible using prior manufacturing methods. Some of these novel features are described herein.

As used herein, the terms "additively manufactured" or "additive manufacturing techniques or processes" refer generally to manufacturing processes wherein successive layers of material(s) are provided on each other to "build-up," layer-by-layer, a three-dimensional component. The successive layers generally fuse together to form a monolithic component which may have a variety of integral sub-components. Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, one skilled in the art will appreciate that the methods and structures disclosed herein may be practiced with any additive manufacturing technique or manufacturing technology. For example, embodiments of the present invention may use layer-additive processes, layer-subtractive processes, or hybrid processes.

Suitable additive manufacturing techniques in accordance with the present disclosure include, for example, Fused Deposition Modeling (FDM), Selective Laser Sintering (SLS), 3D printing such as by inkjets and laserjets, Sterolithography (SLA), Direct Selective Laser Sintering (DSLS), Electron Beam Sintering (EBS), Electron Beam Melting (EBM), Laser Engineered Net Shaping (LENS), Laser Net Shape Manufacturing (LNSM), Direct Metal Deposition (DMD), Digital Light Processing (DLP), Direct Selective Laser Melting (DSLM), Selective Laser Melting (SLM), Direct Metal Laser Melting (DMLM), and other known processes.

In addition to using a direct metal laser sintering (DMLS) or direct metal laser melting (DMLM) process where an energy source is used to selectively sinter or melt portions of a layer of powder, it should be appreciated that according to alternative embodiments, the additive manufacturing process may be a "binder jetting" process. In this regard, binder jetting involves successively depositing layers of additive powder in a similar manner as described above. However, instead of using an energy source to generate an energy beam to selectively melt or fuse the additive powders, binder jetting involves selectively depositing a liquid binding agent onto each layer of powder. The liquid binding agent may be, for example, a photo-curable polymer or another liquid bonding agent. Other suitable additive manufacturing methods and variants are intended to be within the scope of the present subject matter.

The additive manufacturing processes described herein may be used for forming components using any suitable material. For example, the material may be plastic, metal, concrete, ceramic, polymer, epoxy, photopolymer resin, or any other suitable material that may be in solid, liquid, powder, sheet material, wire, or any other suitable form. More specifically, according to exemplary embodiments of the present subject matter, the additively manufactured components described herein may be formed in part, in whole, or in some combination of materials including but not limited to pure metals, nickel alloys, chrome alloys, titanium, titanium alloys, magnesium, magnesium alloys, aluminum, aluminum alloys, iron, iron alloys, stainless steel, and nickel or cobalt based superalloys (e.g., those available under the name Inconel® available from Special Metals Corporation). These materials are examples of materials suitable for use in the additive manufacturing processes described herein, and may be generally referred to as "additive materials."

In addition, one skilled in the art will appreciate that a variety of materials and methods for bonding those materials may be used and are contemplated as within the scope of the present disclosure. As used herein, references to "fusing" may refer to any suitable process for creating a bonded layer of any of the above materials. For example, if an object is made from polymer, fusing may refer to creating a thermoset bond between polymer materials. If the object is epoxy, the bond may be formed by a crosslinking process. If the material is ceramic, the bond may be formed by a sintering process. If the material is powdered metal, the bond may be formed by a melting or sintering process. One skilled in the art will appreciate that other methods of fusing materials to make a component by additive manufacturing are possible, and the presently disclosed subject matter may be practiced with those methods.

In addition, the additive manufacturing process disclosed herein allows a single component to be formed from multiple materials. Thus, the components described herein may be formed from any suitable mixtures of the above materials. For example, a component may include multiple layers, segments, or parts that are formed using different materials, processes, and/or on different additive manufacturing machines. In this manner, components may be constructed which have different materials and material properties for meeting the demands of any particular application. In addition, although the components described herein are constructed entirely by additive manufacturing processes, it should be appreciated that in alternate embodiments, all or a portion of these components may be formed via casting, machining, and/or any other suitable manufacturing process. Indeed, any suitable combination of materials and manufacturing methods may be used to form these components.

An exemplary additive manufacturing process will now be described. Additive manufacturing processes fabricate components using three-dimensional (3D) information, for example a three-dimensional computer model, of the component. Accordingly, a three-dimensional design model of the component may be defined prior to manufacturing. In this regard, a model or prototype of the component may be scanned to determine the three-dimensional information of the component. As another example, a model of the component may be constructed using a suitable computer aided design (CAD) program to define the three-dimensional design model of the component.

The design model may include 3D numeric coordinates of the entire configuration of the component including both external and internal surfaces of the component. For example, the design model may define the body, the surface, and/or internal passageways such as openings, support structures, etc. In one exemplary embodiment, the three-dimensional design model is converted into a plurality of slices or segments, e.g., along a central (e.g., vertical) axis of the component or any other suitable axis. Each slice may define a thin cross section of the component for a predetermined height of the slice. The plurality of successive cross-sectional slices together form the 3D component. The component is then "built-up" slice-by-slice, or layer-by-layer, until finished.

In this manner, the components described herein may be fabricated using the additive process, or more specifically each layer is successively formed, e.g., by fusing or polymerizing a plastic using laser energy or heat or by sintering or melting metal powder. For example, a particular type of additive manufacturing process may use an energy beam, for example, an electron beam or electromagnetic radiation such as a laser beam, to sinter or melt a powder material. Any suitable laser and laser parameters may be used, including considerations with respect to power, laser beam spot size, and scanning velocity. The build material may be formed by any suitable powder or material selected for enhanced strength, durability, and useful life, particularly at high temperatures.

Each successive layer may be, for example, between about 10 µm and 200 µm, although the thickness may be selected based on any number of parameters and may be any suitable size according to alternative embodiments. Therefore, utilizing the additive formation methods described above, the components described herein may have cross sections as thin as one thickness of an associated powder layer, e.g., 10 µm, utilized during the additive formation process.

In addition, utilizing an additive process, the surface finish and features of the components may vary as need depending on the application. For example, the surface finish may be adjusted (e.g., made smoother or rougher) by selecting appropriate laser scan parameters (e.g., laser power, scan speed, laser focal spot size, etc.) during the additive process, especially in the periphery of a cross-sectional layer which corresponds to the part surface. For example, a rougher finish may be achieved by increasing laser scan speed or decreasing the size of the melt pool formed, and a smoother finish may be achieved by decreasing laser scan speed or increasing the size of the melt pool formed. The scanning pattern and/or laser power can also be changed to change the surface finish in a selected area.

Notably, in exemplary embodiments, several features of the components described herein were previously not possible due to manufacturing restraints. However, the present inventors have advantageously utilized current advances in additive manufacturing techniques to develop exemplary embodiments of such components generally in accordance with the present disclosure. While the present disclosure is not limited to the use of additive manufacturing to form these components generally, additive manufacturing does provide a variety of manufacturing advantages, including ease of manufacturing, reduced cost, greater accuracy, etc.

In this regard, utilizing additive manufacturing methods, even multi-part components may be formed as a single piece of continuous metal, and may thus include fewer sub-components and/or joints compared to prior designs. The integral formation of these multi-part components through additive manufacturing may advantageously improve the overall assembly process. For example, the integral formation reduces the number of separate parts that must be assembled, thus reducing associated time and overall assembly costs. Additionally, existing issues with, for example, leakage, joint quality between separate parts, and overall performance may advantageously be reduced.

Also, the additive manufacturing methods described above enable much more complex and intricate shapes and contours of the components described herein. For example, such components may include thin additively manufactured layers and unique fluid passageways with integral inlet and outlet manifolds. In addition, the additive manufacturing process enables the manufacture of a single component having different materials such that different portions of the component may exhibit different performance characteristics. The successive, additive nature of the manufacturing process enables the construction of these novel features. As a result, the components described herein may exhibit improved performance and reliability.

As described briefly above, brake rotors, such as brake rotor 102 are typically used to slow a car by converting their rotational mechanical energy into thermal energy, e.g., waste heat. Therefore, brake rotors must typically include features for dissipating heat in order to prevent damage to the brake rotors, e.g., such as warpage or thermal cracks or faults, or to prevent complete brake failure. Using additive manufacturing techniques as described above, brake rotor 102 may be integrally formed as a single, monolithic piece and may include a variety of features which improve the cooling performance of brake rotor 102 in order to ensure the risk of overheating is minimized.

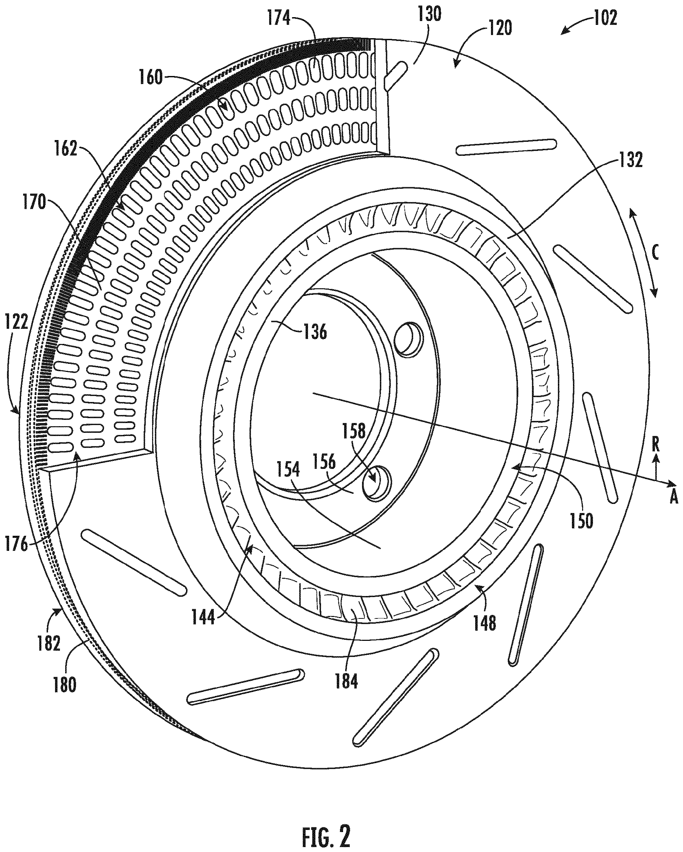

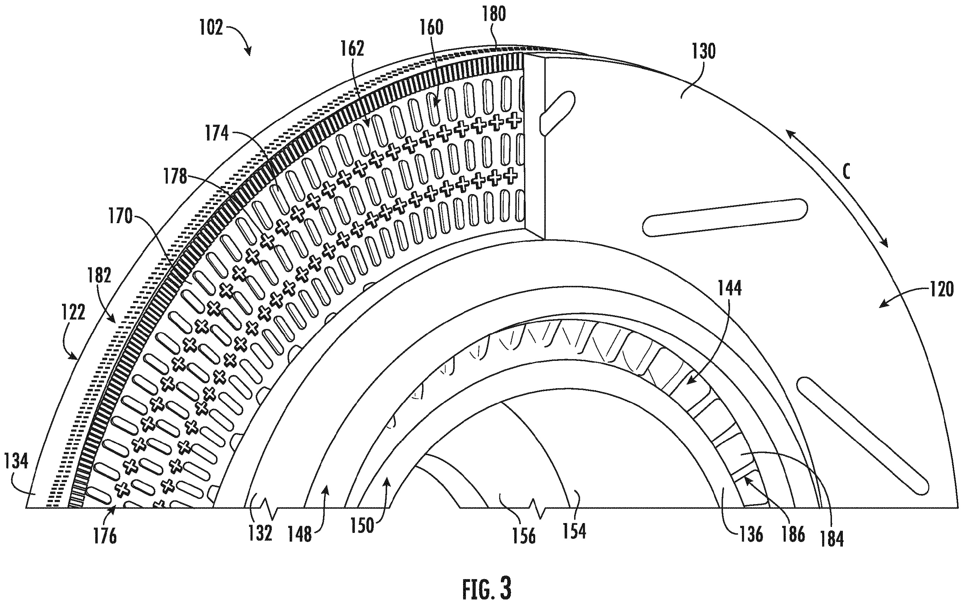

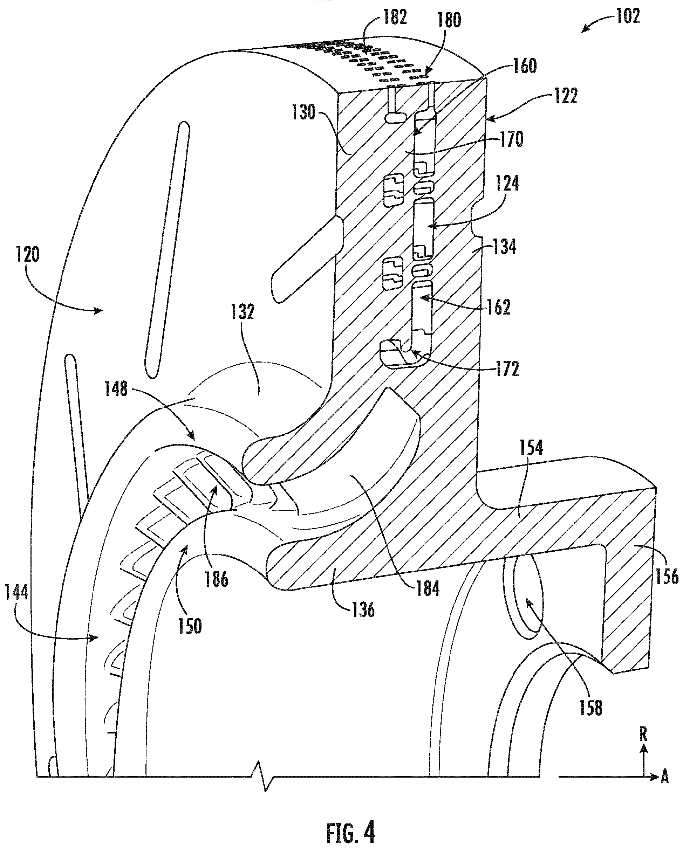

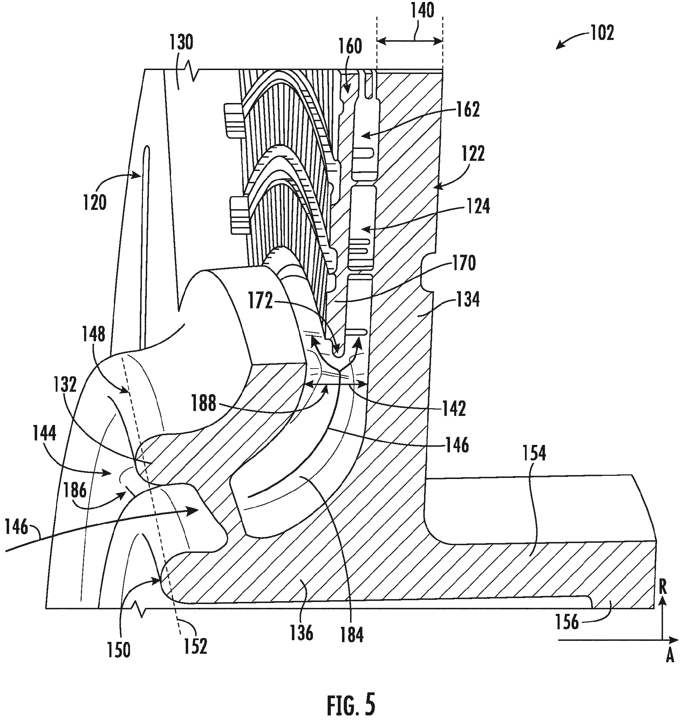

Referring now to FIGS. 2 through 5, brake rotor 102 will be described according to an exemplary embodiment of the present subject matter. In particular, FIGS. 2 and 3 illustrate partial perspective views of brake rotor 102 and FIGS. 4 and 5 illustrated cross sectional views of brake rotor 102 according to an exemplary embodiment. As illustrated, brake rotor 102 generally defines an axial direction A, a radial direction R, and a circumferential direction C.

As illustrated, brake rotor 102 includes a first circular disc 120 and a second circular disc 122 which are generally spaced apart from each other to define an airgap 124. More specifically, first disc 120 defines a first braking plate 130 and an outer inlet lip 132, while second disc 122 defines a second braking plate 134 and an inner inlet lip 136. In general, braking plates 130, 134 extend substantially along the radial direction R such that they are positioned between calipers 110 of brake assembly 100. In this manner, during operation, brake pads 112 are configured for engaging the outer surface of braking plates 130, 132 to slow brake rotor 102.

According to the illustrated embodiment, each braking plate 130, 132 defines a disc thickness 140 measured along the axial direction A. According to the illustrated embodiment, disc thickness 140 of first braking plate 130 is substantially equivalent to disc thickness 140 of second braking plate 132. However, it should be appreciated that these thicknesses may vary according to alternative embodiments. In addition, airgap 124 generally defines an airgap thickness 142 measured along the axial direction A. The size of the airgap thickness 142 may be varied according to alternative embodiments in order to achieve more or less airflow to provide sufficient cooling for a given application. However, according to the illustrated embodiment, airgap thickness 142 is substantially equivalent to disc thickness 140.

In general, outer inlet lip 132 and inner inlet lip 136 generally transition from extending along the radial direction R to extending along the axial direction A to define a flow inlet 144. In this regard, inner inlet lip 136 is generally positioned inward of outer inlet lip 132 along the radial direction R. As brake rotor 102 spins, the flow of cooling air (as indicated by reference numeral 146) is urged into flow inlet 144 and through airgap 124 to cool brake rotor 102. Notably, as described herein, flow inlet 144 and/or airgap 124 may have any suitable size, geometry, and aerodynamic profile to improve the flow of air 146 through brake rotor 102.

According to the illustrated embodiment, outer inlet lip 132 defines an outer forward end 148 and inner inlet lip 136 defines an inner forward end 150. As illustrated, inlet lips 132, 136 extend outside braking plates 130, 134 along the axial direction A. in this regard, for example, outer inlet lip 132 and inner inlet lip 136 extend to a location in the same radial inlet plane 152.

According to the illustrated embodiment, brake rotor 102 may further include a central hub 154 that extends from second disc 122 and defines a mounting flange 156 for mounting on wheel hub 104. More specifically, as illustrated, central hub 154 generally extends along the axial direction A and mounting flange 156 generally extends along the radial direction R from a distal end of central hub 154. In addition, mounting flange 156 may define a plurality of mounting holes 158 which are generally configured for receiving wheel studs 106 to rotatably couple wheel hub 104 and brake rotor 102.

As illustrated in the figures, brake rotor 102 may further include an internal structure 160 which is positioned within airgap 124 and extends between first braking plate 130 and second braking plate 134, e.g., to provide structural support of brake rotor 102. In addition, internal structure 160, along with first braking plate 130 and second braking plate 134, define a plurality of internal passages 162 within airgap 124 through which the flow of cooling air 146 may pass through brake rotor 102. Notably, because brake rotor 102 is additively manufactured, internal passages 162 may have any suitable cross-sectional shape. In this regard, for example, internal passages 162 may be circular, noncircular, or any other suitable shape for improving the flow of cooling air 146.

According to the illustrated embodiment, internal structure 160 includes a septum 170 that extends substantially along the radial direction R and defines a splitting edge 172 which is positioned within the middle of airgap 124 two divide airgap 124 substantially in half. Alternatively, internal structure 160 could include multiple septums 170 extending along the radial direction R and defining splitting edges 172 to divide airgap 124 into a plurality of axially extending passages. According to the exemplary embodiment, splitting edge 172 is radiused to prevent the stagnation of airflow 146 as it passes through internal passages 162. Although septum 170 is illustrated as extending only between first braking plate 130 and second braking plate 134, it should be appreciated that septum 170 may also extend between inlet lips 132, 136 according to alternative embodiments. In addition, brake rotor 102 may include more than one septum 170 or septum 170 may be positioned at any other suitable position between braking plates 130, 134.

In addition, internal structure 160 may include a plurality of fins 174 which generally define the sides of radially extending internal passages 162. In addition, fins 160 may define a plurality of gaps 176 spaced apart along the radial direction R to permit airflow 146 to pass between adjacent internal passages 162. Furthermore, internal structure 160 may include a plurality of turbulators 178 which are positioned within internal passageways 162 and are generally configured for improving the surface area of airflow 146 for improved thermal energy transfer. For example, turbulators 178 may be positioned offset from fins 174 along the radial direction R, e.g., in the middle of each internal passage 162 at gaps 176 to mix the flow between adjacent internal passages 162.

In addition, internal structure 160 may define a plurality of discharge ports 180 which are positioned on a peripheral edge 182 of brake rotor 102 along the radial direction R. In general, these discharge ports 180 are in fluid communication with internal passages 162 to permit airflow 146 to exit brake rotor 102. More specifically, according to the illustrated embodiment, internal structure 160 defines two discharge ports 180 in fluid communication with each of the plurality of internal passages 162 and discharge ports 180 extend substantially along the radial direction R. In addition, discharge ports 180 collectively may define a smaller cross sectional area than the plurality of internal passages 162. It should be appreciated that the discharge ports 180 illustrated herein are only exemplary and may have a different number, size, orientation, etc.

As best illustrated in FIGS. 4 and 5, internal structure 160 may further include a plurality of inlet vanes 164 that are positioned within airgap 124 and extend between outer inlet lip 132 and inner inlet lip 136. In general, vanes 184 are curved relative to the axial direction A and define an aerodynamic profile that is configured for increasing the flow rate of airflow 146 entering airgap 124. According to the illustrated embodiment, vanes 184 are generally positioned upstream of septum 170 and define a leading edge 186 positioned proximate flow inlet 144 and a trailing edge 188. For example, splitting edge 172 of septum 170 is positioned proximate to or downstream of a trailing edge 188 of vanes 184. According to an exemplary embodiment, leading edge 186 of vanes 184 may extend to radial inlet plane 152 or may even extend past radial inlet plane 152 (e.g., further away from first braking plate 130 along the axial direction A). In this manner, vanes 184 are generally configured for scooping air as brake rotor 102 spins, thereby generating airflow 146 which is directed by vanes 184 into internal passages 162 and out discharge ports 180 to cool brake rotor 102 during operation.

In general, brake rotor 102 as described herein may be additively manufactured as a single, integral piece. More specifically, first disc 120 and second disc 122, along with internal structure 160 and vanes 184 may all be integrally formed in a single manufacturing process. In addition to eliminating the need to store additional components, brake rotor 102 may generally contribute to lower manufacturing costs, improved part reliability, and the ability to manufacture parts having flow geometries that achieve better flow performance.

It should be appreciated that brake rotor 102 is described herein only for the purpose of explaining aspects of the present subject matter. For example, brake rotor 102 will be used herein to describe exemplary configurations, constructions, and methods of manufacturing brake rotor 102. It should be appreciated that the additive manufacturing techniques discussed herein may be used to manufacture other brake rotors for use in any suitable device, for any suitable purpose, and in any suitable industry. Thus, the exemplary components and methods described herein are used only to illustrate exemplary aspects of the present subject matter and are not intended to limit the scope of the present disclosure in any manner.

Now that the construction and configuration of brake rotor 102 according to an exemplary embodiment of the present subject matter has been presented, an exemplary method 200 for forming a brake rotor according to an exemplary embodiment of the present subject matter is provided. Method 200 can be used by a manufacturer to form brake rotor 102, or any other suitable brake rotor. It should be appreciated that the exemplary method 200 is discussed herein only to describe exemplary aspects of the present subject matter, and is not intended to be limiting.

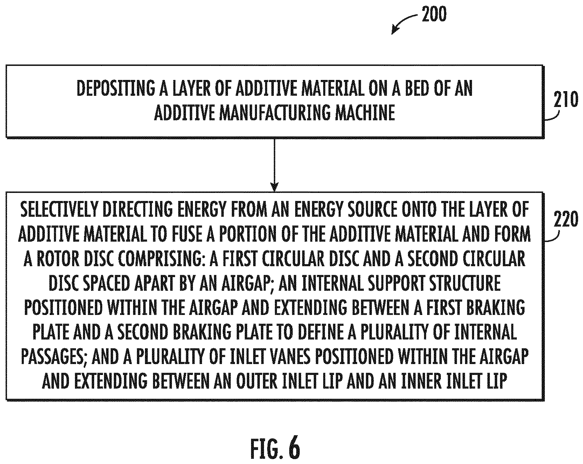

Referring now to FIG. 6, method 200 includes, at step 210, depositing a layer of additive material on a bed of an additive manufacturing machine. Step 220 includes selectively directing energy from an energy source onto the layer of additive material to fuse a portion of the additive material and form a brake rotor. Continuing the example from above, the additively manufacture brake rotor may be brake rotor 102. In this regard, the brake rotor may include a first disc and a second disc spaced apart by an airgap. An internal structure may be positioned within the airgap and extend between a first braking plate and a second braking plate to define a plurality of internal passages. A plurality of vanes may be positioned within the airgap and extend between an outer inlet lip and an inner inlet lip.

FIG. 6 depicts steps performed in a particular order for purposes of illustration and discussion. Those of ordinary skill in the art, using the disclosures provided herein, will understand that the steps of any of the methods discussed herein can be adapted, rearranged, expanded, omitted, or modified in various ways without deviating from the scope of the present disclosure. Moreover, although aspects of method 200 are explained using brake rotor 102 as an example, it should be appreciated that these methods may be applied to manufacture any suitable brake rotor.

A brake rotor and a method for additively manufacturing that brake rotor are described above. Notably, brake rotor 102 may generally include performance-enhancing geometries and flow passages whose practical implementations are facilitated by an additive manufacturing process, as described herein. For example, using the additive manufacturing methods described herein, brake rotor 102 may include separately formed vanes and internal structures for optimizing flow of cooling air and improved structural rigidity of the brake rotor. These features may be introduced during the design of the brake rotor, such that they may be easily integrated into the brake rotor during the build process at little or no additional cost. Moreover, the entire brake rotor, including the discs, the internal structures, the vanes, and all other features can be formed integrally as a single monolithic component.

## Claims

1. An additively manufactured brake rotor (102) defining an axial direction (A), a radial direction (R), and a circumferential direction (C), the brake rotor (102) comprising:
a first disc (120) defining a first braking plate (130) and an outer inlet lip (132);
a second disc (122) defining a second braking plate (134) and an inner inlet lip (136), the second disc (122) being spaced apart from the first disc (120) to define an airgap (124);
an internal structure (160) extending between the first braking plate (130) and the second braking plate (134) to define a plurality of internal passages (162); and
a plurality of vanes (184) extending between the outer inlet lip (132) and the inner inlet lip (136), both lips transitioning from extending along the radial direction to extending along the axial direction, and wherein the inner inlet lip (136) is positioned inward of outer inlet lip (132) along the radial direction (R).

2. The additively manufactured brake rotor (102) of claim 1, wherein the internal structure (160) comprises septums (170) extending along the radial direction (R) and defining splitting edges (172) to divide the airgap (124) into a plurality of axially extending passages (162).

3. The additively manufactured brake rotor (102) of claim 2, wherein the splitting edge (172) of the septum (170) is positioned proximate a trailing edge (188) of the vanes (184).

4. The additively manufactured brake rotor (102) of any of claims 1 to 3, wherein the internal structure (160) comprises a plurality of fins (174) defining the internal passages (162).

5. The additively manufactured brake rotor (102) of claim 4, wherein the internal structure (160) comprises turbulators (178) positioned offset from the fins (184) along the radial direction (R).

6. The additively manufactured brake rotor (102) of any of claims 1 to 5, wherein the internal structure (160) defines a plurality of discharge ports (180) in fluid communication with the internal passages (162), the discharge ports (180) extending along the radial direction (R) through a peripheral edge (182) of the brake rotor (102).

7. The additively manufactured brake rotor (102) of claim 6, wherein each internal passage (162) is in fluid communication with a plurality of discharge ports (180).

8. The additively manufactured brake rotor (102) of claim 6 or 7, wherein the plurality of discharge ports (180) define a smaller cross-section area than the plurality of internal passages (162).

9. The additively manufactured brake rotor (102) of any of claims 1 to 8, wherein the vanes (184) are curved relative to the axial direction (A).

10. The additively manufactured brake rotor (102) of any of claims 1 to 9, wherein the outer inlet lip (132) defines an outer forward end (148) and the inner inlet lip (136) defines an inner forward end (150), the outer forward end (148) and the inner forward end (150) extending past the first braking plate (130) along the axial direction (A).

11. The additively manufactured brake rotor (102) of claim 10, wherein the outer forward end (148) and the inner forward end (150) are positioned in a single radial plane (152).

12. The additively manufactured brake rotor (102) of any of claims 1 to 11, wherein the first disc (120) and the second disc (122) each define a disc thickness (140) and the airgap (124) defines an airgap thickness (142), the disc thickness (140) being substantially equal to the airgap thickness (142).

13. The additively manufactured brake rotor (102) of any of claims 1 to 12, wherein the first brake plate (130) and the second brake plate (134) extend substantially along the radial direction (R).

14. The additively manufactured brake rotor (102) of any of claims 1 to 13, wherein the first disc (120), the second disc (122), the internal structure (160), and the plurality of vanes (184) are additively manufactured as a single monolithic component.

15. A method (200) of manufacturing a brake rotor (102) defining an axial direction (A), a radial direction (R), and a circumferential direction (C), the method (200) comprising:
depositing a layer of additive material on a bed of an additive manufacturing machine (210); and
selectively binding the material via a binding agent to fuse a portion of the additive material and form the brake rotor (220), the brake rotor comprising:
a first disc defining a first braking plate and an outer inlet lip;
a second disc defining a second braking plate and an inner inlet lip, the second disc being spaced apart from the first disc to define an airgap;
an internal structure positioned within the airgap and extending between the first braking plate and the second braking plate to define a plurality of internal passages; and
a plurality of vanes positioned within the airgap and extending between the outer inlet lip and the inner inlet lip, both lips transitioning from extending along the radial direction to extending along the axial direction, and wherein the inner inlet lip (136) is positioned inward of outer inlet lip (132) along the radial direction (R).

## Patentansprüche

1. Additiv hergestellter Bremsrotor (102), der eine axiale Richtung (A), eine radiale Richtung (R) und eine Umfangsrichtung (C) definiert, wobei der Bremsrotor (102) Folgendes umfasst:
eine erste Scheibe (120), die eine erste Bremsplatte (130) und eine äußere Einlasslippe (132) definiert;
eine zweite Scheibe (122), die eine zweite Bremsplatte (134) und eine innere Einlasslippe (136) definiert, wobei die zweite Scheibe (122) von der ersten Scheibe (120) beabstandet ist, um einen Luftspalt (124) zu definieren;
eine interne Struktur (160), die sich zwischen der ersten Bremsplatte (130) und der zweiten Bremsplatte (134) erstreckt, um mehrere interne Durchgänge (162) zu definieren; und
mehrere Schaufeln (184), die sich zwischen der äußeren Einlasslippe (132) und der inneren Einlasslippe (136) erstrecken, wobei beide Lippen von einem Erstrecken entlang der radialen Richtung zu einem Erstrecken entlang der axialen Richtung übergehen und wobei die innere Einlasslippe (136) von der äußeren Einlasslippe (132) entlang der radialen Richtung (R) nach innen gerichtet angeordnet ist.

2. Additiv hergestellter Bremsrotor (102) nach Anspruch 1, wobei die interne Struktur (160) Septen (170) umfasst, die sich entlang der radialen Richtung (R) erstrecken und Spaltkanten (172) definieren, um den Luftspalt (124) in mehrere sich axial erstreckende Durchgänge (162) zu trennen.

3. Additiv hergestellter Bremsrotor (102) nach Anspruch 2, wobei die Spaltkante (172) des Septums (170) nahe einer Hinterkante (188) der Schaufeln (184) angeordnet ist.

4. Additiv hergestellter Bremsrotor (102) nach einem der Ansprüche 1 bis 3, wobei die interne Struktur (160) mehrere Rippen (174) umfasst, die die internen Durchgänge (162) definieren.

5. Additiv hergestellter Bremsrotor (102) nach Anspruch 4, wobei die interne Struktur (160) Turbulenzerzeuger (178) umfasst, die entlang der radialen Richtung (R) von den Rippen (184) versetzt angeordnet sind.

6. Additiv hergestellter Bremsrotor (102) nach einem der Ansprüche 1 bis 5, wobei die interne Struktur (160) mehrere Auslassöffnungen (180) in einer Fluidverbindung mit den inneren Durchgängen (162) definiert, wobei sich die Auslassöffnungen (180) entlang der radialen Richtung (R) durch eine periphere Kante (182) des Bremsrotors (102) erstrecken.

7. Additiv hergestellter Bremsrotor (102) nach Anspruch 6, wobei jeder interne Durchgang (162) in Fluidverbindung mit mehreren Auslassöffnungen (180) steht.

8. Additiv hergestellter Bremsrotor (102) nach Anspruch 6 oder 7, wobei die mehreren Auslassöffnungen (180) eine kleinere Querschnittsfläche definieren als die mehreren internen Durchgänge (162).

9. Additiv hergestellter Bremsrotor (102) nach einem der Ansprüche 1 bis 8, wobei die Schaufeln (184) relativ zu der axialen Richtung (A) gekrümmt sind.

10. Additiv hergestellter Bremsrotor (102) nach einem der Ansprüche 1 bis 9, wobei die äußere Einlasslippe (132) ein äußeres vorderes Ende (148) definiert und die innere Einlasslippe (136) ein inneres vorderes Ende (150) definiert, wobei das äußere vordere Ende (148) und das innere vordere Ende (150) sich über die erste Bremsplatte (130) hinaus entlang der axialen Richtung (A) erstrecken.

11. Additiv hergestellter Bremsrotor (102) nach Anspruch 10, wobei das äußere vordere Ende (148) und das innere vordere Ende (150) in einer einzigen radialen Ebene (152) angeordnet sind.

12. Additiv hergestellter Bremsrotor (102) nach einem der Ansprüche 1 bis 11, wobei die erste Scheibe (120) und die zweite Scheibe (122) jeweils eine Scheibendicke (140) definieren und der Luftspalt (124) eine Luftspaltdicke (142) definiert, wobei die Scheibendicke (140) im Wesentlichen gleich der Luftspaltdicke (142) ist.

13. Additiv hergestellter Bremsrotor (102) nach einem der Ansprüche 1 bis 12, wobei sich die erste Bremsplatte (130) und die zweite Bremsplatte (134) im Wesentlichen entlang der radialen Richtung (R) erstrecken.

14. Additiv hergestellter Bremsrotor (102) nach einem der Ansprüche 1 bis 13, wobei die erste Scheibe (120), die zweite Scheibe (122), die interne Struktur (160) und die mehreren Schaufeln (184) als eine einzige monolithische Komponente additiv hergestellt sind.

15. Verfahren (200) zum Herstellen eines Bremsrotors (102), der eine axiale Richtung (A), eine radiale Richtung (R) und eine Umfangsrichtung (C) definiert, wobei das Verfahren (200) Folgendes umfasst:
Abscheiden einer Schicht aus additivem Material auf ein Bett einer additiven Herstellungsmaschine (210); und
selektives Binden des Materials über ein Bindemittel, um einen Anteil des additiven Materials zu verschmelzen und den Bremsrotor (220) auszubilden, wobei der Bremsrotor Folgendes umfasst:
eine erste Scheibe, die eine erste Bremsplatte und eine äußere Einlasslippe definiert;
eine zweite Scheibe, die eine zweite Bremsplatte und eine innere Einlasslippe definiert, wobei die zweite Scheibe von der ersten Scheibe beabstandet ist, um einen Luftspalt zu definieren;
eine interne Struktur, die innerhalb des Luftspalts angeordnet ist und sich zwischen der ersten Bremsplatte und der zweiten Bremsplatte erstreckt, um mehrere interne Durchgänge zu definieren; und
mehrere Schaufeln, die innerhalb des Luftspalts angeordnet sind und sich zwischen der äußeren Einlasslippe und der inneren Einlasslippe erstrecken, wobei beide Lippen von dem Erstrecken entlang der radialen Richtung zu dem Erstrecken entlang der axialen Richtung übergehen und wobei die innere Einlasslippe (136) von der äußeren Einlasslippe (132) entlang der radialen Richtung (R) nach innen gerichtet angeordnet ist.

## Revendications

1. Un rotor de frein (102) fabriqué de manière additive définissant une direction axiale (A), une direction radiale (R) et une direction circonférentielle (C), le rotor de frein (102) comprenant :
un premier disque (120) définissant une première plaque de freinage (130) et une lèvre d'entrée extérieure (132) ;
un second disque (122) définissant une seconde plaque de freinage (134) et une lèvre d'entrée intérieure (136), le second disque (122) étant espacé du premier disque (120) pour définir un entrefer (124) ;
une structure interne (160) s'étendant entre la première plaque de freinage (130) et la seconde plaque de freinage (134) pour définir une pluralité de passages internes (162) ; et
une pluralité d'aubes (184) s'étendant entre la lèvre d'entrée extérieure (132) et la lèvre d'entrée intérieure (136), les deux lèvres effectuant une transition en s'étendant du long de la direction radiale au long de la direction axiale, et la lèvre d'entrée intérieure (136) étant positionnée vers l'intérieur de la lèvre d'entrée extérieure (132) le long de la direction radiale (R).

2. Rotor de frein (102) fabriqué de manière additive selon la revendication 1, la structure interne (160) comprenant des septums (170) s'étendant le long de la direction radiale (R) et définissant des bords de séparation (172) pour diviser l'entrefer (124) en une pluralité de passages s'étendant axialement (162).

3. Rotor de frein fabriqué de manière additive (102) selon la revendication 2, le bord de séparation (172) du septum (170) étant positionné à proximité d'un bord arrière (188) des aubes (184).

4. Rotor de frein (102) fabriqué de manière additive selon l'une quelconque des revendications 1 à 3, la structure interne (160) comprenant une pluralité d'ailettes (174) définissant les passages internes (162).

5. Rotor de frein fabriqué de manière additive (102) selon la revendication 4, la structure interne (160) comprenant des turbulateurs (178) positionnés décalés par rapport aux ailettes (184) le long de la direction radiale (R).

6. Rotor de frein (102) fabriqué de manière additive selon l'une quelconque des revendications 1 à 5, la structure interne (160) définissant une pluralité d'orifices de décharge (180) en communication fluidique avec les passages internes (162), les orifices de décharge (180) s'étendant le long de la direction radiale (R) à travers un bord périphérique (182) du rotor de frein (102).

7. Rotor de frein (102) fabriqué de manière additive selon la revendication 6, chaque passage interne (162) étant en communication fluidique avec une pluralité d'orifices de décharge (180).

8. Rotor de frein fabriqué de manière additive (102) selon la revendication 6 ou 7, la pluralité d'orifices de décharge (180) définissant une section transversale plus petite que la pluralité de passages internes (162).

9. Rotor de frein fabriqué de manière additive (102) selon l'une quelconque des revendications 1 à 8, les aubes (184) étant incurvées par rapport à la direction axiale (A).

10. Rotor de frein (102) fabriqué de manière additive selon l'une quelconque des revendications 1 à 9, la lèvre d'entrée extérieure (132) définissant une extrémité avant extérieure (148) et la lèvre d'entrée intérieure (136) définissant une extrémité avant intérieure (150), l'extrémité avant extérieure (148) et l'extrémité avant intérieure (150) s'étendant au-delà de la première plaque de freinage (130) le long de la direction axiale (A).

11. Rotor de frein fabriqué de manière additive (102) selon la revendication 10, l'extrémité avant externe (148) et l'extrémité avant interne (150) étant positionnées dans un seul plan radial (152).

12. Rotor de frein (102) fabriqué de manière additive selon l'une quelconque des revendications 1 à 11, le premier disque (120) et le second disque (122) définissant chacun une épaisseur de disque (140) et l'entrefer (124) définissant une épaisseur d'entrefer (142), l'épaisseur du disque (140) étant sensiblement égale à l'épaisseur de l'entrefer (142).

13. Rotor de frein fabriqué de manière additive (102) selon l'une quelconque des revendications 1 à 12, la première plaque de frein (130) et la seconde plaque de frein (134) s'étendant sensiblement le long de la direction radiale (R).

14. Rotor de frein (102) fabriqué de manière additive selon l'une quelconque des revendications 1 à 13, le premier disque (120), le second disque (122), la structure interne (160) et la pluralité d'aubes (184) étant fabriqués de manière additive comme un seul composant monolithique.

15. Procédé (200) de fabrication d'un rotor de frein (102) définissant une direction axiale (A), une direction radiale (R) et une direction circonférentielle (C), le procédé (200) comprenant :
le dépôt d'une couche de matériau additif sur un lit d'une machine de fabrication additive (210) ; et
la liaison sélective du matériau par l'intermédiaire d'un liant pour faire fondre une partie du matériau additif et former le rotor de frein (220), le rotor de frein comprenant :
un premier disque définissant une première plaque de freinage et une lèvre d'entrée extérieure ;
un second disque définissant une seconde plaque de freinage et une lèvre d'entrée intérieure, le second disque étant espacé du premier disque pour définir un entrefer ;
une structure interne positionnée à l'intérieur de l'entrefer et s'étendant entre la première plaque de freinage et la seconde plaque de freinage pour définir une pluralité de passages internes ; et
une pluralité d'aubes positionnées à l'intérieur de l'entrefer et s'étendant entre la lèvre d'entrée extérieure et la lèvre d'entrée intérieure, les deux lèvres effectuant une transition en s'étendant du long de la direction radiale au long de la direction axiale, et la lèvre d'entrée intérieure (136) étant positionnée vers l'intérieur de lèvre d'entrée extérieure (132) le long de la direction radiale (R).
